(19) Europäisches Patentamt / European Patent Office / Office européen des brevets

(11) **EP 2 946 913 B1**

(12) **FASCICULE DE BREVET EUROPEEN**

(45) Date de publication et mention
de la délivrance du brevet:
**06.03.2019 Bulletin 2019/10**

(51) Int Cl.:
***B29D 11/00*** *(2006.01)*

(21) Numéro de dépôt: **15168528.6**

(22) Date de dépôt: **20.05.2015**

(54) **PROCÉDÉ DE FABRICATION D'UNE LENTILLE OPHTALMIQUE**

HERSTELLUNGSVERFAHREN EINER AUGENLINSE

METHOD FOR MANUFACTURING AN OPHTHALMIC LENS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.05.2014 FR 1454590**

(43) Date de publication de la demande:
**25.11.2015 Bulletin 2015/48**

(73) Titulaire: **Essilor International
94220 Charenton-le-Pont (FR)**

(72) Inventeur: **Marck, Christelle
94227 CHARENTON CEDEX (FR)**

(74) Mandataire: **Santarelli
49, avenue des Champs-Elysées
75008 Paris (FR)**

(56) Documents cités:
**FR-A1- 2 918 917          US-A1- 2007 212 518
US-A1- 2011 222 142**

**Description**

DOMAINE DE L'INVENTION

L'invention a trait à la fabrication des lentilles ophtalmiques qui comportent un substrat et un film fonctionnel assujetti à une face courbe dudit substrat.

ARRIERE PLAN TECHNOLOGIQUE

On sait que les films fonctionnels utiles aux lentilles ophtalmiques sont parfois plans à l'état initial, pour des raisons de commodité de fabrication de ces films ; et qu'on connaît déjà des procédés de report d'un film fonctionnel initialement plan sur une face courbe d'un substrat.

Dans ces procédés, pour éviter que des défauts apparaissent dans le film, on préforme le film en lui conférant une courbure initiale appropriée à froid ou de préférence à chaud (thermoformage), puis on l'applique sur le substrat.

Par exemple, la demande de brevet américain US 2007/0212518 propose un procédé de fabrication d'une lentille ophtalmique selon le préambule de la revendication 1.

En particulier, la demande de brevet français 2 883 984, à laquelle correspond la demande de brevet américain US 2008/0314499, propose de positionner le substrat ayant une face courbe sur un porte-substrat à l'intérieur d'une enceinte, de positionner le film fonctionnel plan dans un porte-film à l'extrémité supérieure de l'enceinte pour fermer cette enceinte, de positionner l'enceinte à la verticale d'un tampon flexible avec alignement de leurs centres géométriques respectifs, de préformer le film fonctionnel en appliquant le tampon flexible sur le film, de mettre en dépression l'enceinte entraînant la mise en contact du substrat et du film fonctionnel par leurs centres géométriques respectifs du côté de la face courbe du substrat, et de translater verticalement le tampon flexible entraînant l'établissement d'un contact conformai entre le film fonctionnel et le substrat du côté de sa face courbe.

La demande de brevet français 2 918 917, à laquelle correspond la demande de brevet américain US 2010/0193112, propose de mettre en oeuvre un procédé de report semblable, mais dans lequel l'immobilisation directe du film par le porte-film suivant un contour annulaire, est remplacée par l'immobilisation d'une membrane auxiliaire déformable initialement plane sur une face de laquelle le film fonctionnel est retenu par une couche de liaison configurée pour que le film fonctionnel ait une forme qui varie conformément à la déformation de la membrane, le film fonctionnel restant alors parallèle à la membrane auxiliaire, seule la membrane auxiliaire étant maintenue par le porte-film à son pourtour, le film fonctionnel n'étant maintenu en contact avec la membrane auxiliaire que par la couche de liaison.

La mise en oeuvre du procédé de report décrit par la demande de brevet français 2 918 917 s'effectue :

- comme dans la demande de brevet français 2 883 984, c'est-à-dire qu'on utilise un tampon flexible pour opérer le préformage du film fonctionnel qui lui donne une courbure dont la convexité est tournée vers la face courbe du substrat, on met en contact le centre de la face convexe du film fonctionnel avec le centre de la face courbe convexe du substrat, et on applique ensuite le film fonctionnel avec le tampon flexible en inversant sa courbure afin de diffuser radialement à partir du centre du film fonctionnel jusqu'à sa périphérie le contact conformai entre le film fonctionnel et le substrat ; ou

- en variante, on n'utilise pas de tampon flexible et la dépression dans l'enceinte est remplacée par une surpression pour opérer le préformage du film fonctionnel qui lui donne donc une courbure dont la concavité est tournée vers la face courbe du substrat, on met en contact le centre de la face concave du film fonctionnel avec le centre de la face courbe convexe du substrat et on applique ensuite le film, sans inverser sa courbure, en entrainant le substrat vers le film, afin de diffuser radialement à partir du centre du film jusqu'à sa périphérie le contact conformai entre le film fonctionnel et le substrat.

Dans le procédé de report décrit par la demande de brevet français 2 918 917, le film fonctionnel n'étant nullement maintenu à sa périphérie par des moyens mécaniques, il peut glisser sur la membrane pendant que la déformation est générée, réduisant alors les déformations qui sont créées dans le film fonctionnel.

On sait par ailleurs que les fonctions offertes par les films fonctionnels sont très diverses, par exemple une fonction anti-choc, une fonction anti-rayures, une fonction anti-reflet, une fonction polarisante, une fonction de filtre de coloration, une fonction photochromique, une fonction anti-statique ou une fonction anti-salissure.

OBJET DE L'INVENTION

L'invention vise à fournir un procédé de fabrication d'une lentille ophtalmique mettant en oeuvre un tel procédé de report dans le cas où le film fonctionnel doit conférer à la lentille ophtalmique la capacité de filtrer de manière particulièrement précise une bande prédéterminée de longueur d'ondes relativement étroite.

L'invention propose à cet effet un procédé de fabrication d'une lentille ophtalmique comportant un substrat et un film fonctionnel assujetti à une face courbe dudit substrat, ledit procédé de fabrication comportant un procédé de report dudit film fonctionnel, initialement plan, sur ladite face courbe ; caractérisé en ce que, pour que ledit film fonctionnel assujetti à ladite face courbe soit configuré pour filtrer une bande prédéterminée de longueurs d'ondes centrée sur une longueur d'ondes notée $\lambda p$ avec ladite face courbe qui a une courbure notée CS sélectionnée parmi un ensemble prédéterminé de courbures, on met en oeuvre les étapes de :

i) présélectionner une pluralité de films fonctionnels chacun initialement plan et chacun initialement configuré pour filtrer une bande de longueurs d'ondes centrée sur une longueur d'ondes notée $\lambda i$ individuelle à chaque film présélectionné ;
ii) établir par des essais une première base de connaissances donnant, pour chaque courbure dudit ensemble, le taux de déformation de chaque film présélectionné à l'étape i) lorsqu'est mis en oeuvre ledit procédé de report ;
iii) établir par des essais une deuxième base de connaissances donnant, sur une plage de taux de déformation prédéterminée, pour chaque film présélectionné à l'étape i), la longueur d'onde notée $\lambda i'$ sur laquelle est centrée la bande de longueur d'ondes que filtre ledit chaque film en fonction de son taux de déformation ;
iv) sélectionner avec la première base de connaissances et la deuxième base de connaissances, parmi la pluralité de films présélectionnés à l'étape i), un film dont la longueur d'onde $\lambda i'$ est égale à $\lambda p$ pour le taux de déformation donné pour la courbure CS ; et
v) mettre en oeuvre ledit procédé de report pour assujettir le film sélectionné à l'étape iv) sur ladite face courbe.

Grâce aux deux bases de connaissance établies par des essais, il est possible, à partir de la courbure CS de la face courbe du substrat et à partir de la longueur d'onde $\lambda p$ sur laquelle doit être centrée la bande prédéterminée de longueur d'ondes qui doit être filtrée par la lentille ophtalmique, de choisir dans la pluralité de films fonctionnels présélectionnés, chacun initialement plan, celui qui aura les propriétés filtrantes voulues après que le procédé de report a été mis en oeuvre.

L'invention est basée sur l'observation que pour un même procédé de report et une même courbure CS de la face courbe du substrat, deux films fonctionnels de conformation différente, chacun initialement plan et chacun initialement configuré pour filtrer une bande de longueur d'ondes centrée sur la longueur d'onde $\lambda i$ qui lui est individuelle, sont susceptibles de se déformer différemment étant donné qu'ils sont de constitutions différentes ; et que deux films identiques sur lesquels on met en oeuvre deux procédés de report différents, par exemple avec un chauffage à des températures différentes, vont se déformer différemment pour une même courbure CS de la face courbe.

Ainsi, il se trouve qu'il n'y a pas de correspondance directe entre la courbure CS de la face courbe et le taux de déformation d'un film fonctionnel. Au contraire, le taux de déformation est individuel au film et individuel au procédé de report.

L'invention est également basée sur l'observation que pour un même taux de déformation, la modification des propriétés filtrantes sera différente d'un film à l'autre.

En établissant les deux bases de connaissances susmentionnées, le procédé de fabrication selon l'invention offre une maîtrise particulièrement fine des modifications des propriétés filtrantes des films fonctionnels que subissent de tels films lors de la mise en oeuvre du procédé de report.

Une fois que les deux bases de connaissance sont établies, le procédé selon l'invention permet de sélectionner de façon sure et rapide le film à employer, au bénéfice de la qualité et de la reproductibilité des performances de la lentille fabriquée en matière de précision de filtration.

Selon des caractéristiques avantageuses :

- ledit film fonctionnel est un film filtrant organique et interférentiel ;
- ledit film fonctionnel présente un ordre tridimensionnel, avec une couche organique formée par des cristaux photoniques ;
- ledit film fonctionnel présente un ordre bidimensionnel, avec une couche organique formée par des cristaux cholestériques ; et/ou
- ledit film fonctionnel présente un ordre monodimensionnel, de préférence avec un empilement d'une pluralité de films organiques.

La sélection d'un film organique et interférentiel, tel qu'un filtre interférentiel à cristaux photoniques (CP), un film optique multicouches (MOF : Multilayer Optical Film) ou un filtre à cristaux cholestériques, permet de filtrer de façon particulièrement précise une bande prédéterminée de longueur d'ondes relativement étroite, en particulier dans le spectre visible.

Dans le cadre de l'invention, par film organique il faut comprendre un film composé en majorité, par exemple supérieur à 80%, de substances organiques, le film pouvant comprendre éventuellement des parties inorganiques sous la forme de colloïdes inorganiques ou de nanoparticules inorganiques. L'invention s'applique particulièrement aux films organiques interférentiels, ne comprenant que des substances organiques.

On sait qu'un film interférentiel à cristaux photoniques (CP) est par exemple obtenu par le dépôt sur un film mince d'une couche organique, en particulier :

- par auto-assemblage de particules colloïdales organiques (structure coeur-écorce dans une matrice) constituant une couche déposée sur un film en matière plastique (PET ou TAC par exemple), tel que décrit par exemple dans la demande de brevet américain US 2013/0171438 ; ou
- par structuration périodique d'une couche organique, tel que décrit par exemple dans la demande de brevet américain US 2011/0222142.

Les films optiques multicouches (MOF) sont bien connus et peuvent être obtenus auprès de la société américaine 3M ou de la société japonaise DUPONT-TEIJIN et sont décrits par exemple dans le brevet américain US 6,531,230, dans la demande internationale WO 00/07046, dans le brevet américain US 5,976,424, dans la demande internationale WO 99/36248 et dans le brevet américain US 6,117,530.

Les filtres à cristaux cholestériques, aussi connus sous le nom de nématiques chiraux, présentent un empilement de couches composées d'un même matériau. Dans chaque couche, un ordre nématique existe. Entre deux couches, la direction de l'ordre nématique change selon la nature du matériau. La rotation de 360° de cette direction de l'ordre nématique est obtenue pour une épaisseur précise de matériau, définissant une longueur caractéristique. Ces filtres présentent des ordres dans deux directions. De tels filtres sont illustrés dans la demande de brevet américain US2012/0320306.

Du fait que les couches sont de nature organique, elles résistent à un certain taux de déformation, ce qui est intéressant puisque le procédé de report engendre une déformation des couches lors du préformage.

On notera que l'invention est partiellement basée sur l'observation qu'au contraire les films minéraux et interférentiels, s'ils permettent également de filtrer de façon particulièrement précise une bande prédéterminée de longueur d'ondes relativement étroite, ne conviennent pas à la mise en oeuvre du procédé de report. En effet, lors des déformations, les couches minérales ont tendance à craquer, y compris pour des faibles déformations, par exemple inférieures à 1%.

On sait que les filtres interférentiels sont basés sur le fait que dans un système ordonné (que l'ordre soit monodimensionnel comme pour les MOF ou tridimensionnel comme pour les CP), la loi de BRAGG indique qu'une onde de longueur d'ondes particulière arrivant sur ce système sera réfléchie totalement. Si l'ordre dans le matériau n'est pas parfait, la réflexion sera partielle, mais toujours centrée sur une longueur d'ondes particulière.

La relation entre la longueur d'ondes réfléchie $\lambda$ et la distance caractéristique (longueur de corrélation) du matériau est, pour un ordre de diffraction limité à l'ordre 1 :

$$2\,d\,n\,\sin(\theta) = \lambda$$

où $\theta$ est l'angle d'incidence sur le matériau, d la distance caractéristique du matériau et n l'indice moyen de réfraction du matériau.

Si l'on prend $\theta = 90°$, étant donné que $\sin(90°) = 1$, on a la relation

$$\lambda = 2\,d\,n$$

Ainsi, si un matériau est déformé, sa longueur caractéristique varie et la longueur d'ondes sélectionnée varie aussi.

Par exemple, si d varie de 1%, alors $\lambda$ doit varier aussi de 1% (à indice constant, la relation est linéaire).

Selon des caractéristiques avantageuses :

- la bande de longueur d'ondes centrée sur $\lambda p$ est comprise entre 400 nm et 460 nm, de préférence entre 415 nm et 450 nm ; et/ou
- au moins 20%, préférentiellement 30%, très préférentiellement 50% de la lumière de la bande de longueur d'onde centrée sur $\lambda p$ est filtrée.

Selon d'autres caractéristiques avantageuses, le procédé de report comporte les étapes de :

i) préformer ledit film fonctionnel pour lui donner une courbure ;
ii) mettre en contact le centre de la face convexe dudit film fonctionnel avec le centre de la face courbe dudit substrat ;

et

iii) appliquer ensuite ledit film fonctionnel afin de diffuser radialement à partir du centre du film jusqu'à sa périphérie le contact conformai entre ledit film et ledit substrat.

Selon d'autres caractéristiques avantageuses :

- lesdites étapes i), ii) et iii) sont mises en oeuvre avec ledit film fonctionnel qui fait partie d'une structure stratifiée comportant une membrane auxiliaire et une couche de liaison entre ledit film fonctionnel et ladite membrane auxiliaire, seule ladite membrane auxiliaire étant immobilisée en périphérie ;
- chaque dit taux de déformation d'un dit film est le maximum du taux de déformation majeure subie par le film sur une surface ; et/ou
- ladite plage de taux de déformation prédéterminé de la deuxième base de connaissance comporte une plage allant de 0 à 5%.

BREVE DESCRIPTION DES DESSINS

L'exposé de l'invention sera maintenant poursuivi par la description détaillée d'exemples de réalisation, donnée ci-après à titre illustratif et non limitatif, en référence aux dessins annexés, sur lesquels :

- la figure 1 est une vue schématique en élévation-coupe d'un dispositif connu de mise en oeuvre d'un procédé connu de report d'un film fonctionnel, initialement plan, sur une face courbe d'un substrat afin de fabriquer une lentille ophtalmique comportant ce substrat et ce film fonctionnel assujetti à cette face courbe ;
- les figures 2 à 5 sont des vues semblables à la figure 1, montrant différentes étapes successives de ce procédé de report ;
- la figure 6 est une vue schématique en élévation-coupe d'un dispositif connu semblable à celui illustré sur les figures 1 à 5 mais comportant en outre un système d'application à tampon ;
- les figures 7 et 8 sont des vues semblables à la figure 6, mais montrant des étapes successives du procédé de report connu mis en oeuvre avec le dispositif de la figure 6 ;
- la figure 9 est une vue schématique en élévation d'une lentille optique conforme à l'invention, comportant un substrat sur une face courbe duquel est assujetti un film fonctionnel configuré pour filtrer une bande prédéterminée de longueurs d'ondes relativement étroite ;
- la figure 10 est une vue schématique en coupe montrant, à l'état initial plan, la structure stratifiée ayant permis de reporter le film fonctionnel de la lentille de la figure 9 sur l'une des faces courbes de son substrat, cette structure stratifiée comportant ce film fonctionnel à l'état initial plan, une membrane auxiliaire ainsi qu'une couche de liaison entre la membrane auxiliaire et le film fonctionnel ;
- la figure 11 est une vue en plan de la structure stratifiée montrée sur la figure 10 ;
- la figure 12 est une vue semblable à la figure 11 mais montrant la structure stratifiée après report du film fonctionnel sur la face courbe du substrat ;
- la figure 13 est une représentation des taux de déformation majeure mesurés sur la surface du film fonctionnel du côté du substrat ;
- la figure 14 est un graphe comportant une courbe donnant les taux de déformation majeure (indiqués en ordonnées) en fonction des coordonnées développées le long de la ligne XIV de la figure 13 (indiquées en abscisses) ;
- la figure 15 est une vue semblable à la figure 10 d'un film fonctionnel identique à celui que comporte la structure de la figure 10 et ayant les mêmes dimensions que la membrane auxiliaire de la structure de la figure 10 ;
- la figure 16 est un graphe semblable à la figure 14 mais pour le film fonctionnel de la figure 15 après qu'il a été reporté sur une face courbe identique avec le même procédé de report si ce n'est que le film de la figure 15 a remplacé la structure de la figure 10 ;
- la figure 17 est un graphe comportant des courbes donnant chacune les taux de transmission (indiqués en ordonnées) en fonction des longueurs d'ondes (indiquées en abscisses) au travers de films fonctionnels identiques reportés sur des faces courbes identiques ; respectivement une première courbe, en trait fin, correspondant au film fonctionnel de la lentille de la figure 9, et une seconde courbe, en trait fort, correspondant au film fonctionnel de la figure 15 reporté comme il vient d'être indiqué à propos de la figure 16 ;
- la figure 18 est une vue schématique expliquant l'agencement du film fonctionnel que comporte la lentille de la figure 9 ou la lentille comportant le film illustré sur la figure 15 après qu'il a été reporté comme indiqué à propos de la figure 16 ;
- la figure 19 montre une variante de la couche de cristaux photoniques du film fonctionnel ;
- la figure 20 montre l'agencement d'un autre film fonctionnel configuré pour filtrer une bande prédéterminée de longueurs d'ondes relativement étroite ;

la figure 21 est un graphe semblable à la figure 16 mais pour un film fonctionnel agencé comme montré sur la figure 20 ;

- la figure 22 est un graphe semblable à la figure 17 pour cet autre film fonctionnel ;
- la figure 23 illustre une première base de connaissances, schématisée ici sous la forme d'un tableau, utile à la sélection du film fonctionnel approprié ; et
- la figure 24 illustre une deuxième base de connaissances, ici sous la forme d'un abaque, utile, en combinaison avec la base de connaissances illustrée sur la figure 23, pour sélectionner le film fonctionnel approprié pour qu'une fois reportée sur la face courbe du substrat, le film permette à la lentille obtenue de filtrer une bande prédéterminée de longueurs d'ondes relativement étroite centrée sur une longueur d'ondes cible.

## DESCRIPTION DETAILLEE D'EXEMPLES DE REALISATION

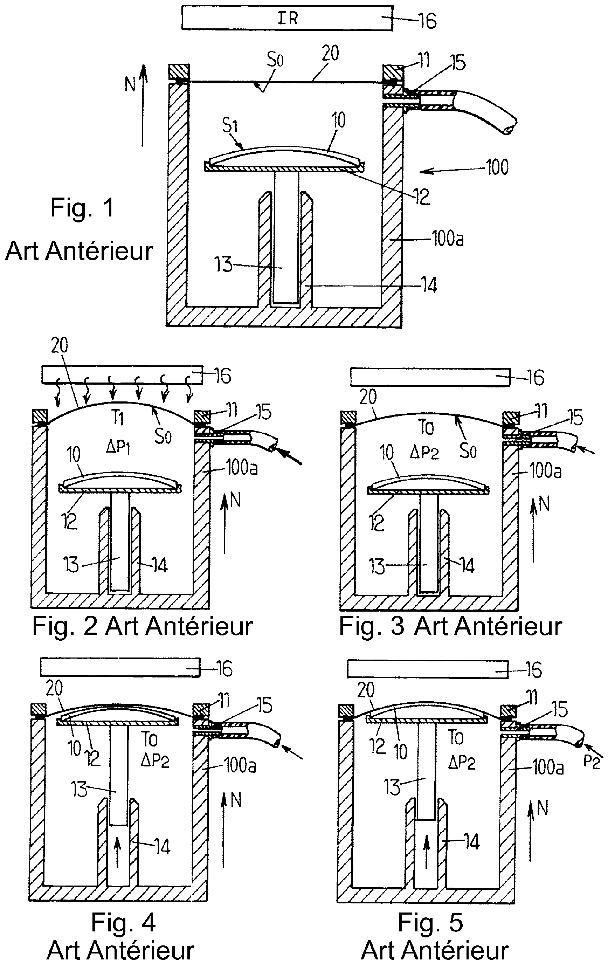

Le dispositif connu de report illustré sur la figure 1 comporte une enceinte 100, par exemple de forme cylindrique et d'axe vertical, ouverte sur sa face supérieure. Une paroi latérale 100a de l'enceinte 100 est munie à son extrémité supérieure d'un système de fixation d'une structure stratifiée 20, initialement plane, comportant un film fonctionnel initialement plan dont la surface S0 est à appliquer sur la face courbe S1 d'un substrat 10 afin de fabriquer une lentille ophtalmique comportant le substrat 10 et le film fonctionnel assujetti par sa face S0 à la face courbe S1 du substrat 10.

La structure 20 comporte, en outre du film fonctionnel initialement plan, une membrane auxiliaire initialement plane de plus grandes dimensions que le film fonctionnel ainsi qu'une couche de liaison, par exemple une couche d'adhésif viscoélastique, entre le film fonctionnel et la membrane auxiliaire.

Le système de fixation de la structure 20 sert à fermer l'enceinte 100 de façon étanche. Ce système de fixation comprend un organe d'étanchéité tel que, par exemple, un joint torique qui est destiné à être comprimé par un anneau de fixation 11 entre la paroi latérale 100a et un bord périphérique de la membrane auxiliaire de la structure 20, en utilisant des organes de serrage non représentés, par exemple des vis.

Dans l'enceinte 100 est disposé un support 12 apte à maintenir le substrat 10. Le support 12 est disposé à l'extrémité d'une tige 13 engagée dans un cylindre 14 de façon à permettre de monter le support 12 à l'intérieur de l'enceinte 100, au-delà du niveau de l'anneau de fixation 11.

Le déplacement du support 12, par l'intermédiaire de la tige 13 et du cylindre 14, est commandé depuis l'extérieur de l'enceinte 100, en utilisant une unité de commande électrique ou hydraulique, par exemple. Une telle unité de commande à distance est supposée connue et sa description n'est pas reprise ici.

L'enceinte 100 est pourvue d'un orifice 15 qui est relié par une conduite appropriée à une source gazeuse externe (non représentée). Cette source permet d'établir une pression pneumatique contrôlée à l'intérieur de l'enceinte 100.

Ainsi, l'intérieur de l'enceinte 100 peut être mis en surpression ou en dépression par rapport à la pression ambiante qui existe à l'extérieur de l'enceinte 100. La pression dans l'enceinte 100 peut être variée et contrôlée d'une façon indépendante de la position et du déplacement du support 12.

Autrement dit, la pression dans l'enceinte 100 et la position du support 12 sont ajustées par des commandes séparées.

Enfin, un système de chauffage 16 est disposé au-dessus de l'enceinte 100, face à son organe de fermeture, c'est-à-dire la structure 20.

Un système de chauffage par rayonnement infrarouge permet une utilisation particulièrement simple et rapide, mais d'autres systèmes de chauffage peuvent être utilisés alternativement.

Avantageusement, le système de chauffage 16, la pression à l'intérieur de l'enceinte 100 et la position du support 12 sont contrôlés par un automate programmable qui permet d'exécuter une séquence de variation des différents paramètres du dispositif, pour mettre en oeuvre un procédé de report.

Le substrat 10 est installé sur le support 12 avec la face S1 tournée vers le haut. Le support 12 est ensuite amené dans une position basse à l'intérieur de l'enceinte 100.

La structure 20 est fixée sur l'enceinte au moyen de l'anneau 11, avec la face S0 du film fonctionnel tournée vers l'intérieur de l'enceinte, conformément à la direction orientée N qui est indiquée sur la figure 1.

Dans cette configuration, la face S1 du substrat 10 est située à distance en-dessous de la face S0 du film fonctionnel; et l'enceinte 100 est fermée hermétiquement par la structure 20.

Lors d'une première étape, la pression à l'intérieur de l'enceinte 100 est augmentée, de façon à créer une différence de pression pneumatique $\Delta P_1$ entre les deux côtés de la structure 20, qui est comprise entre 0,1 bar et 4,0 bars, de préférence entre 0,1 bar et 1,0 bar.

La pression à l'extérieur de l'enceinte 100 est la pression atmosphérique et l'enceinte 100 est mise en surpression. Pendant cette étape, la structure 20 est chauffée au moyen du système 16, pour la rendre plus souple, plus plastique et plus extensible. La température $T_1$ de la structure 20 est alors comprise entre 80°C et 185°C. Eventuellement, il peut être avantageux de chauffer la structure 20 avant d'augmenter la pression dans l'enceinte 100, et de poursuivre le chauffage pour maintenir la température de la structure 20 pendant que la pression dans l'enceinte 100 est augmentée.

La structure 20 prend alors une forme sensiblement sphérique en étant gonflée vers l'extérieur de l'enceinte 100, comme illustré sur la figure 2.

Le chauffage de la structure 20 est ensuite arrêté et la température de la structure 20 est ramenée à une valeur sensiblement égale à la température ambiante $T_0$, qui est comprise en 10°C et 40°C.

Lors d'une seconde étape, la pression à l'intérieur de l'enceinte 100 est diminuée, si besoin (on pourrait déjà être à la bonne pression), pour obtenir une différence de pression pneumatique $\Delta P_2$ entre les deux côtés de la structure 20 telle que le rayon de courbure de la structure 20 devienne un peu supérieur au rayon de courbure de la face convexe S1 du substrat 10 (figure 3).

Cette première étape et cette seconde étape constituent un préformage de la structure 20, à une valeur de courbure qui est intermédiaire entre la courbure initialement nulle de la structure 20 et la courbure de la face S1 du substrat 10. Dans le cas présent, ce préformage est un thermoformage.

Lors d'une troisième étape, le support 12 est monté de sorte que la face S1 du substrat 10 entre en contact avec la face S0 de la structure 20.

Du fait des rayons de courbure respectifs des deux faces S0 et S1, le contact se produit d'abord au centre du substrat 10 (figure 4), puis s'étend radialement au fur et à mesure que le support 12 continue à monter. La face S1 du substrat 10 pousse alors la structure 20 vers l'extérieur de l'enceinte 100, au-delà de la position de la structure 20 avant la montée du support 12.

La face S1 du substrat 10 est ainsi progressivement appuyée contre la face S0 du film fonctionnel de la structure 20, avec une vitesse de déplacement relative qui peut être comprise entre 0,1 et 1,0 mm/s. Une valeur limite supérieure de cette vitesse dépend du comportement plastique de la structure 20.

De cette façon, le film fonctionnel prend la forme de la face S1, sans former de plis ni de déchirure (figure 5) et avec un taux de déformation minimisé. Pendant cette troisième étape, la température de la structure 20 est constante, en restant égale à la température ambiante par exemple. Le substrat 10 peut être maintenu appuyé contre le film de la structure 20 pendant une durée d'attente qui peut être comprise entre 0,5 secondes et 2 minutes.

La surpression dans l'enceinte 10 est ensuite supprimée et l'anneau de fixation 11 est retiré.

Le substrat 10 est alors récupéré avec le film fonctionnel de la structure 20 assujetti à la face S1. L'assujettissement est fait grâce à une couche d'adhésif présente sur la face S0 du film fonctionnel de la structure 20 ou sur la face S1 du substrat 10 voire à la fois sur la face S0 et sur la face S1.

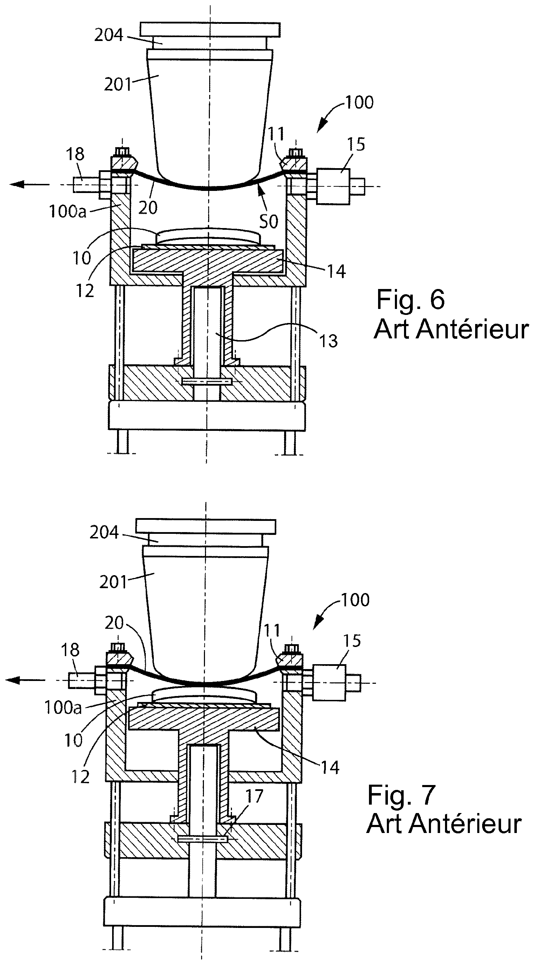

Le dispositif connu illustré sur les figures 6 à 8 est semblable à celui illustré sur les figures 1 à 5, si ce n'est qu'il comporte, en outre de l'enceinte 100, un système d'application qui comporte un tampon 201 ; si ce n'est que la tige 13 est fixe et que le cylindre 14 est mobile et porte le support 12 ; et si ce n'est que les moyens pneumatiques avec lesquels l'enceinte coopère sont configurés pour la mettre en dépression et/ou en surpression.

Ainsi, la paroi 100a est munie, en plus de l'orifice d'admission gazeuse 15, d'un orifice d'aspiration 18, connecté à une unité de pompage non représenté.

Un système de blocage 17 (figure 7) permet de fixer la hauteur du cylindre 14 et donc du support 12.

Le tampon 201 fait partie d'un système d'application qui comporte des glissières verticales sur lesquelles est monté le tampon 201, et un système de déplacement du tampon 201, comportant par exemple un moteur pas-à-pas qui entraîne une vis de translation.

Un détecteur de pression 204, qui peut comprendre un élément piézoélectrique, permet de mesurer une force d'application du tampon 201 contre la structure 20.

Lors d'une première étape (figure 6), le tampon 201 est descendu de façon à repousser une partie centrale de la structure 20 vers l'intérieur de l'enceinte 100. Etant donné que la structure 20 est maintenue fermement sur sa périphérie par l'anneau 11, elle est déformée et prend une forme courbe, qui correspond à celle de l'extrémité inférieure du tampon 201. Cette première étape constitue un préformage de la structure 20, de sorte que celle-ci peut ensuite être appliquée régulièrement sur la face courbe S1 du substrat 10.

Lors d'une seconde étape (figure 7), le substrat 10 est approché de la structure 20 en créant une dépression entre ceux-ci, à l'intérieur de l'enceinte 100. Le cylindre 14 monte au fur et à mesure qu'un gaz initialement présent dans l'enceinte est aspiré par l'orifice 18. L'aspiration est arrêtée lorsqu'un contact ponctuel est réalisé entre la structure 20 et la face S1 du substrat 10. La hauteur du cylindre 14 est alors fixée au moyen du système de blocage 17.

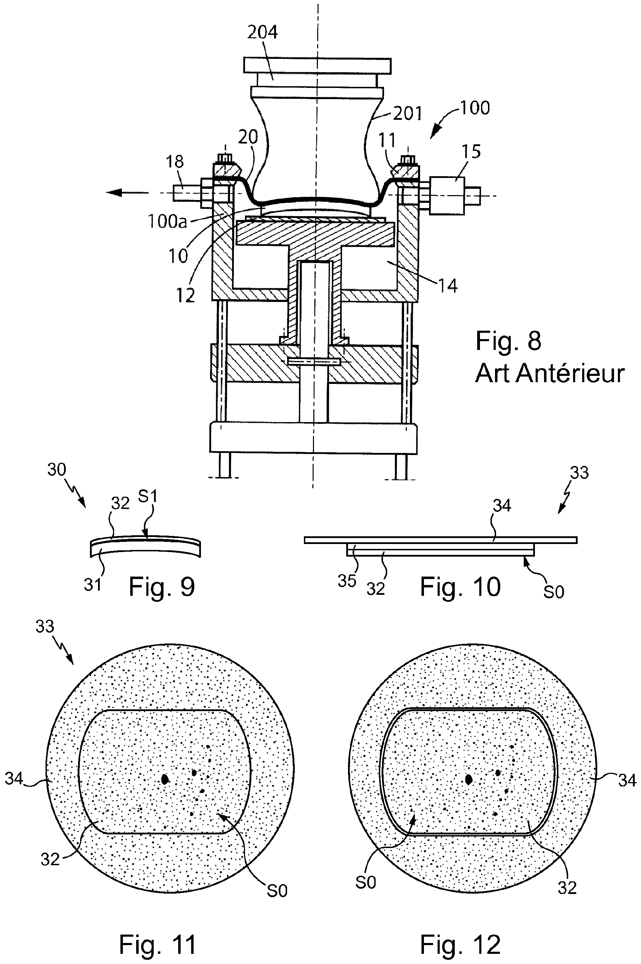

Enfin, lors d'une troisième étape (figure 8), le tampon 201 est de nouveau descendu en le pressant contre la structure 20, du côté de celle-ci qui est opposé au substrat 10. De cette façon, la structure 20 est appliquée sur toute la face S1 du substrat 10.

L'extrémité du tampon 201 est de préférence constituée d'un matériau déformable et souple, de façon à obtenir une application régulière de la structure 20 sur tout le substrat 10. La structure 20 est alors repoussée par le tampon 201 contre toute la face S1.

L'anneau 11 est ensuite relâché et le tampon 201 remonté.

De même que pour le dispositif illustré sur les figures 1 à 5, le substrat 10 est alors récupéré avec le film fonctionnel de la structure 20 assujetti à la face S1. L'assujettissement est fait grâce à une couche d'adhésif présente sur la face S0 du film fonctionnel de la structure 20 ou sur la face S1 du substrat 10 voire à la fois sur la face S0 et sur la face S1.

Une fois que le film fonctionnel de la structure stratifiée 20 a été reporté sur la face S1 du substrat 10, la membrane auxiliaire de la structure stratifiée 20 est enlevée en provoquant une rupture de la couche de liaison entre le film fonctionnel et la membrane auxiliaire, une telle séparation étant effectuée par exemple par pelage.

Pour plus de détails sur les dispositifs et les procédés de report ainsi que sur l'agencement de la structure stratifiée 20 illustrés sur les figures 1 à 8, on pourra consulter la demande de brevet français 2 918 917 susmentionnée.

La figure 9 montre une lentille ophtalmique 30 comportant un substrat 31 ayant une face courbe S1 et un film fonctionnel 32 configuré pour filtrer une bande prédéterminée de longueur d'ondes relativement étroite.

Le substrat 31 et le film fonctionnel 32 ont été assujettis l'un à l'autre avec un procédé de report que l'on va maintenant décrire.

Ici, le substrat 31 et le film fonctionnel 32 forment la lentille ophtalmique 30 dès la fin de ce procédé de report. En variante, la lentille ophtalmique 30 est obtenue après d'autres opérations de fabrication, par exemple des opérations d'usinage, de traitement de surface et/ou de revêtement de la face du substrat 31 qui est opposée à la face S1 sur laquelle est assujetti le film fonctionnel 32.

Pour reporter le film fonctionnel 32 sur le substrat 31, on a tout d'abord préparé la structure stratifiée 33 montrée sur la figure 10, qui comporte, tout comme la structure 20 mise en oeuvre avec le dispositif montré sur les figures 1 à 5 ou le dispositif montré sur les figures 6 à 8, une membrane auxiliaire 34 et une couche d'adhésif viscoélastique 35 pour effectuer la liaison entre la membrane auxiliaire 34 et le film fonctionnel, ici le film 32.

D'une façon générale, le film fonctionnel 32 a été reporté sur la face S1 du substrat 31 avec un dispositif semblable à celui montré sur les figures 1 à 5 mais comportant en outre un tampon d'application tel que le tampon 201 du dispositif illustré sur les figures 6 à 8.

Après qu'une étape semblable à celle montrée sur les figures 1 et 2 a été mise en oeuvre, l'enceinte 100 est remise à la pression atmosphérique.

Cette première étape constitue un préformage de la structure stratifiée 33, à une valeur de rayon de courbure qui est inférieure au rayon de courbure de la face S1 du substrat 10. Dans le cas présent, ce préformage est un thermoformage.

Dans une deuxième étape, un tampon d'application tel que le tampon 201 est utilisé pour venir en contact avec la face convexe de la structure 33 (située du côté opposé au film fonctionnel 32), et lorsque le tampon d'application tel que 201 avance vers le substrat 31 disposé sur le support 12, la concavité de la structure stratifiée 33 s'inverse, c'est-à-dire que la face en contact avec le tampon tel que 201 devient concave (et la face S0 du film 32 devient convexe).

La structure stratifiée 33 a alors une forme courbe qui correspond à celle de l'extrémité inférieure du tampon tel que 201. La géométrie de ce tampon est configurée pour convenir au report des films 32 sur la surface S1 du substrat 31.

Ensuite, le substrat 31 est approché de la structure stratifiée 33 jusqu'à ce qu'un contact ponctuel soit réalisé entre la structure stratifiée 33 et la face S1 du substrat 31.

Ensuite, la montée du support tel que 12 s'accompagne de la descente et de l'écrasement du tampon tel que 201. Ainsi, la face S0 du film fonctionnel 32 est appliquée sur toute la face S1 du substrat 31, de la façon montrée sur les figures 7 et 8.

On observera qu'au cours de l'application du film fonctionnel 32 sur la face courbe S1 du substrat 31, le contact conformai entre le film 32 et le substrat 31 est diffusé radialement à partir du centre du film 32 jusqu'à sa périphérie.

L'anneau 11 est ensuite relâché et le tampon tel que 201 est remonté.

Le substrat 31 est alors récupéré avec le film fonctionnel 32 assujetti à la face S1. L'assujettissement est fait grâce à une couche d'adhésif présente sur la face S0 du film fonctionnel 32 ou sur la face S1 du substrat 31 voire à la fois sur la face S0 et la face S1.

Une fois que le film 32 de la structure stratifiée 33 a été reporté sur la face S1 du substrat 31, la membrane auxiliaire 34 est enlevée en provoquant une rupture de la couche de liaison 35 entre le film fonctionnel 32 et la membrane auxiliaire 34, une telle séparation étant effectuée par exemple par pelage.

Dans l'exemple illustré, la face courbe S1 du substrat 31 est convexe. En variante, la face courbe S1 est concave, le tampon tel que 201 ayant alors à son extrémité distale une géométrie correspondante.

On va maintenant expliquer comment l'on peut mesurer la répartition des déformations subies par la face S0 du film fonctionnel entre l'état initial plan et l'état reporté sur la face courbe S1 du substrat 31.

Ainsi qu'on le voit sur la figure 11, qui montre la structure stratifiée 33 du côté de la face S0, c'est-à-dire le côté que l'on voit en bas sur la figure 10, la face S0 du film fonctionnel 32 ainsi que la face de la membrane auxiliaire 34 située du même côté, est recouverte d'un mouchetis aléatoire constitué de fines gouttelettes de peinture noire.

Bien entendu, ce mouchetis est utilisé exclusivement pour connaître le comportement du film fonctionnel 31 dans le cadre d'études préalables à la production des lentilles telles que la lentille 30 (une lentille ophtalmique ne peut comporter un tel mouchetis).

Pour mesurer la répartition des déformations subies par la face S0 du film fonctionnel 32 recouverte du mouchetis, on utilise un système comportant un dispositif de prises de vue comportant deux caméras prenant des images distinctes afin de permettre une reconstruction tridimensionnelle, et un logiciel d'analyse des images fournies par les caméras. Ici, on utilise le système de mesure par stéréo-corrélation d'images commercialisé sous le nom de ARAMIS par la société GOM.

La figure 12 montre, de la même façon que la figure 11, la structure stratifiée 33 une fois que le film fonctionnel 32 a été reporté sur la face S1 du substrat 31.

On observera que, du fait des déformations, il existe autour du film 32 un liseré blanc (sans le mouchetis) dû au glissement, lors de la déformation, entre le film fonctionnel 32 et la membrane auxiliaire 34.

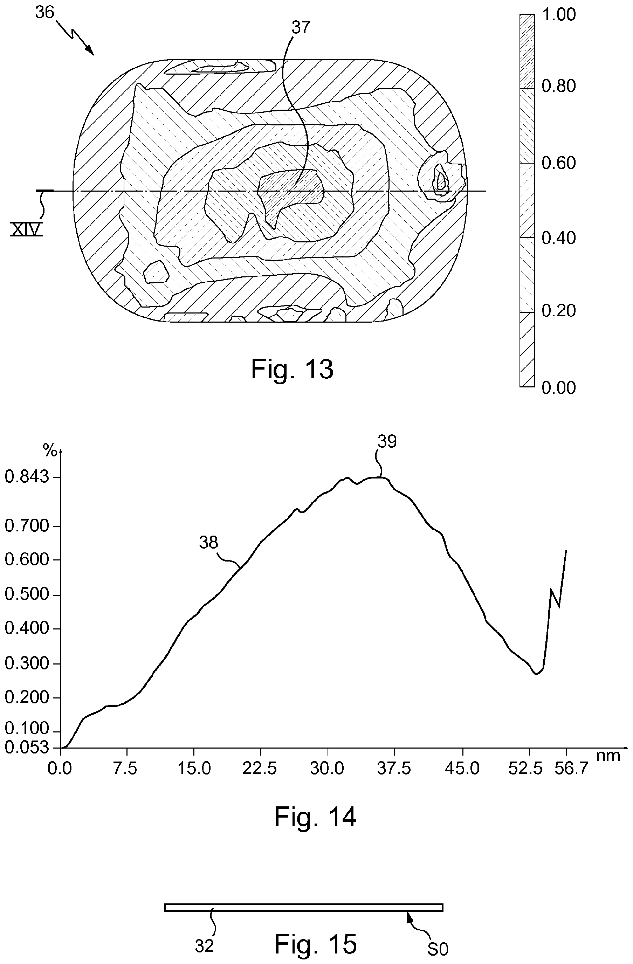

La figure 13 montre quelles sont les déformations subies par la face S0 du film 32 lors du procédé de report. On notera qu'il est possible de connaître ces déformations dès la fin de l'étape de préformage (étape semblable à celle illustrée sur les figures 1 et 2 suivie d'un retour de l'enceinte telle que 100 à la pression atmosphérique). Il a en effet été vérifié qu'aucune déformation supplémentaire n'est apportée lors des étapes ultérieures du procédé de report, et en particulier lors de l'étape d'application du film 32 sur la face S1 du substrat 31.

La représentation de ces déformations, donnée sur la figure 13 sous la forme d'une carte 36, a été obtenue par le système de mesure de déformations susmentionné, grâce à la comparaison entre les images prises, par les deux caméras, de la face S0 du film 32 à l'état initial plan et à l'état reporté sur la face S1 du substrat 31.

Grâce à la présence des deux caméras, il est possible de quantifier les déplacements à la surface de la face S0 suivant les trois directions de l'espace.

On accède ainsi à trois composantes de la déformation, notées E1, E2 et E3. Vu l'hypothèse d'incompressibilité des matériaux considérés, E1 + E2 + E3 = 0.

En chaque point, E1 est la déformation majeure, exprimée suivant une direction de l'espace telle que la déformation est maximale pour le matériau.

E2 est la déformation secondaire, c'est-à-dire la composante de la déformation suivant une direction telle que le tenseur des déformations soit diagonal (direction transversale à la direction des valeurs de déformation E1).

E3 correspond soit à un épaississement (valeur positive) soit à un amincissement (valeur négative du matériau supposé incompressible).

Les valeurs montrées sur la figure 13 sont les valeurs de la déformation E1, c'est-à-dire les valeurs de déformation majeure.

L'échelle des déformations montrée à droite de la figure 13 est en %.

On voit que la déformation est maximale dans une zone centrale 37 de la face S0 du film fonctionnel 32 ; et qu'à l'exception de certaines zones locales, la déformation décroît vers le bord du film fonctionnel 32.

La figure 14 est un graphe sur lequel sont portées en abscisse les coordonnées développées le long de la ligne XIV de la figure 13 et en ordonnées les taux de déformation majeure. La courbe 38 donne ainsi le taux de déformation majeure en fonction de la coordonnée développée le long de la ligne XIV, c'est-à-dire la distance le long de cette ligne par rapport à une coordonnées d'origine, qui est ici située sur l'intersection entre la ligne XIV et le bord du film 32 du côté situé à gauche sur la figure 13.

On voit que le sommet 39 de la courbe 38 correspond à un taux de déformation majeure d'environ 0,8%.

La figure 15 montre un film fonctionnel 32 identique au film fonctionnel 32 de la structure stratifiée 33, et ayant les mêmes dimensions que la membrane auxiliaire 34.

Ce film 32 a été reporté sur la face courbe S1 d'un substrat 31 identique au substrat 31 de la lentille 30 montrée sur la figure 9, avec le même procédé de report si ce n'est que le seul film 32 a remplacé la structure stratifiée 33.

Ainsi, c'est directement ce film 32 qui a été retenu en périphérie par l'anneau de fixation 11.

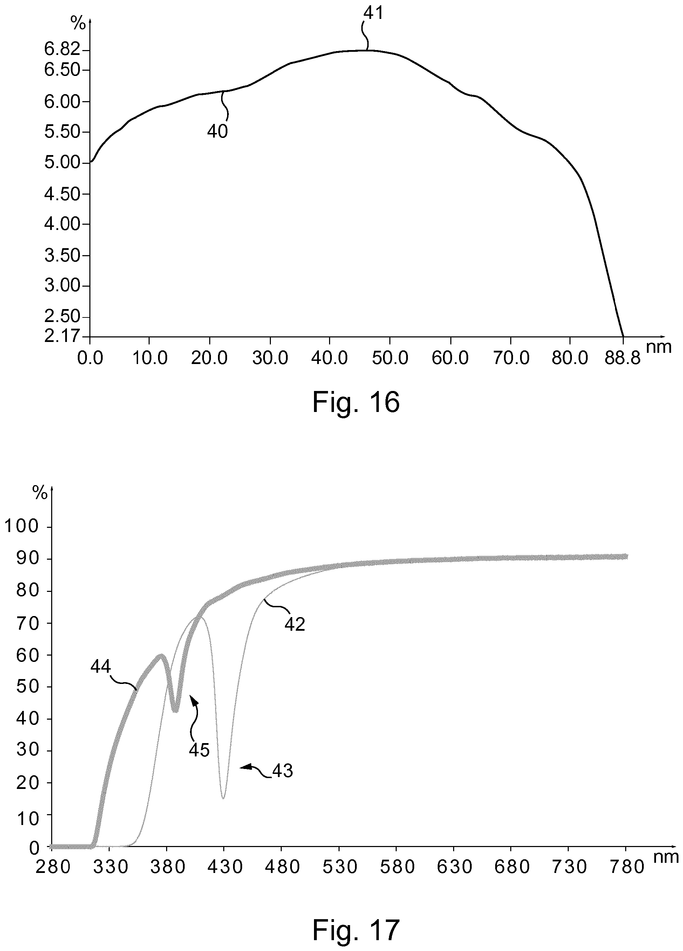

La figure 16 est un graphe semblable à la figure 14, mais pour le film 32 montré sur la figure 15 après qu'il a ainsi été reporté sur la face courbe S1 du substrat 31.

En examinant la courbe 40 de la figure 16, on voit que le sommet 41 de cette courbe, c'est-à-dire le maximum des taux de déformation majeure, est de l'ordre de 6,8%.

D'une façon générale, les taux de déformation majeure donnés par la courbe 40 sont beaucoup plus élevés que les taux de déformation majeure donnés par la courbe 38.

Il est ici rappelé que la courbe 38 correspond au film 32 pour lequel le procédé de report a été mis en oeuvre avec la structure stratifiée 33 montrée sur la figure 10, offrant une possibilité de glissement lors du préformage ; et que la courbe 40 correspond au film 32 montré sur la figure 15, pour lequel le procédé de report a été mis en oeuvre directement sur le film 32, maintenu sur sa périphérie.

La figure 17 est un graphe sur lequel sont portées en abscisses les longueurs d'ondes de la lumière et en ordonnées les taux de transmission au travers de la lentille 30 ou de la lentille semblable comportant le film 32 montré, à l'état initial plan, sur la figure 15.

La courbe 42 de la figure 17 correspond à la lentille 30 montrée sur la figure 9.

On voit que la courbe 42 comporte un pic 43 tel que le film 32 de la lentille 30 de la figure 9 confère à cette lentille la capacité de filtrer une bande de longueur d'ondes relativement étroite centrée sur la longueur d'ondes de 430 nm.

La longueur d'onde présentant le maximum de filtration est définie par la longueur d'onde pour laquelle le pic 43 présente son extremum : ici 430 nm.

Le taux de coupure du film 32 est défini par la fraction de lumière filtrée pour la longueur d'onde présentant le maximum de filtration : ici 85% environ.

On convient de définir que la lumière filtrée correspond à la largeur en longueur d'onde du pic 43 pris à sa mi-hauteur : ici la lumière est filtrée d'environ 415 nm à environ 450 nm et sur cette gamme de longueur d'onde ; la transmission de lumière est inférieure à 50%.

Il est ici rappelé que, comme décrit à l'appui de la figure 14, le film 32 de la lentille 30 de la figure 9 présente un maximum du taux de déformation majeure d'environ 0,8%.

On notera que la courbe 42 est identique ou quasi-identique à la courbe correspondante du film 32 à l'état initial plan.

La courbe 44 de la figure 17 correspond à la lentille semblable à la lentille 30 comportant le film 32 montré, à l'état initial plan, sur la figure 15.

On voit que la courbe 44 comporte un pic 45 tel que le film 32 de cette lentille lui confère la capacité de filtrer une bande de longueur d'ondes relativement étroite centrée sur la longueur d'ondes de 394 nm.

On notera que le film 32, à l'état initial plan, est configuré pour filtrer une bande de longueur d'ondes relativement étroite centrée sur la longueur d'ondes de 430 nm.

Il est ici rappelé que, comme décrit à l'appui de la figure 16, le film 32 auquel se rapporte la courbe 44 présente un maximum du taux de déformation majeure d'environ 6,8%.

On observera que le taux de coupure donné par le pic 45 de la courbe 44 est d'environ 60% alors que le taux de coupure donné par le pic 43 de la courbe 42 est d'environ 85%.

Cette modification de performance est liée aux déformations subies par le film 32 dont l'agencement, qui est d'ordre tridimensionnel ainsi qu'expliqué ci-après, devient moins régulier.

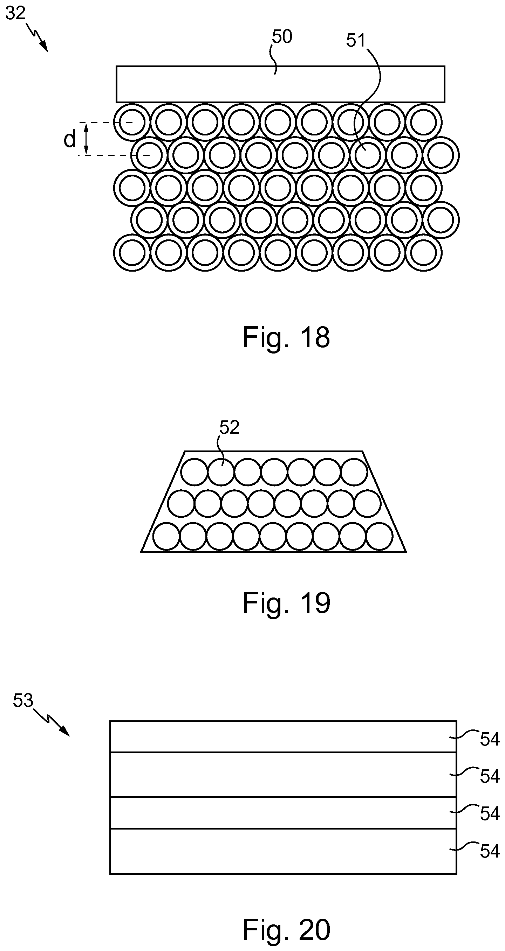

On va maintenant décrire, à l'appui de la figure 18, comment est agencé le film fonctionnel 32 de la figure 10 ou de la figure 15.

L'obtention du film fonctionnel 32, qui est un filtre interférentiel à cristaux photoniques (CP), se fait par le dépôt sur un film mince support 50 d'une couche organique 51.

Ici, la couche organique 51 est formée par auto-assemblage de particules colloïdales organiques (structure coeur-écorce dans une matrice) constituant une couche d'épaisseur d'environ 25 $\mu$m ; et le film mince de support 50 est en matière plastique (PET ou TAC) d'épaisseur d'environ 80 $\mu$m.

Le film 32 peut être obtenu de la façon décrite par exemple dans la demande de brevet américain US 2013/0171438.

En variante, la couche organique 51 est remplacée par la couche organique 52 montrée sur la figure 19.

La couche organique 52 est formée par structuration périodique, avec des vides d'air dans une matrice en polymère. Une telle couche peut être obtenue de la façon décrite par exemple dans la demande de brevet américain US 2011/0222142.

La figure 20 montre un autre film 53 également configuré pour filtrer une bande prédéterminée de longueur d'ondes relativement étroite, mais ayant un agencement différent d'un film mince de support sur lequel est déposé une couche organique.

Le film 53 est un film optique multicouches (MOF : Multilayer Optical Film) obtenu par un empilement d'une pluralité de films organiques 54 d'indice de réfraction alternés.

Un tel film peut être obtenu auprès de la société américaine 3M ou de la société japonaise DUPONT-TEIJIN et est décrit par exemple dans le brevet américain US 6,531,230, dans la demande internationale WO 00/07046, dans le brevet américain US 5,976,424, dans la demande internationale WO 99/36248 et dans le brevet américain US 6,117,530.

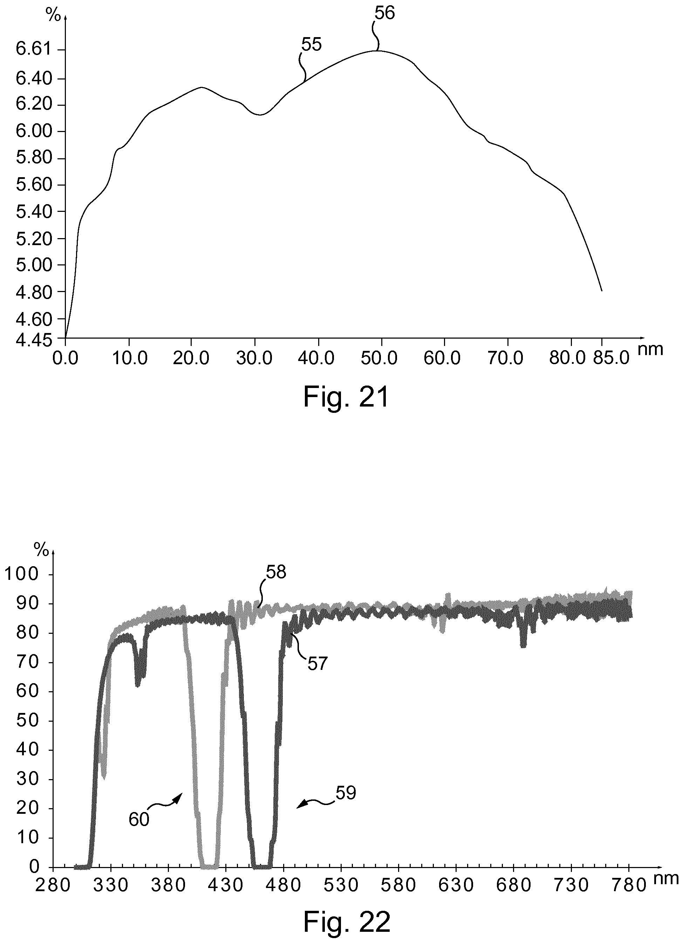

La figure 21 est un graphe semblable à la figure 14 ou à la figure 16, mais pour le film 53 montré sur la figure 20 après qu'il a été reporté sur la face courbe S1 du substrat 31 de la même façon que le film 32 montré sur la figure 15 (bord directement fixé par l'anneau tel que 11).

En examinant la courbe 55 de la figure 21, on voit que le sommet 56 de cette courbe, c'est-à-dire le maximum des taux de déformation majeure, est d'environ 6,6%.

La figure 22 est un graphe sur lequel sont portés en abscisses les longueurs d'ondes de la lumière et en ordonnées les taux de transmission au travers d'une lentille semblable à la lentille 30 montrée sur la figure 9 mais où le film 32 est remplacé par le film 53 (procédé de report du film 53 mis en oeuvre avec une structure stratifiée telle que 33) ou au travers d'une lentille semblable comportant le film 53 reporté de la même façon que le film 32 montré sur la figure 15 (procédé de report du film 53 mis en oeuvre avec le film 53 maintenu en périphérie).

La courbe 57, en trait foncé, correspond au film 53 après qu'il a été reporté sur la face S1 d'un substrat 31 semblable à celui de la lentille 30 de la figure 9 avec un procédé de report mettant en oeuvre une structure stratifiée telle que 33. La courbe 58, en trait clair, correspond au film 53 qui a été reporté sur la face courbe S1 de la même façon que le film 32 montré sur la figure 15 (bord directement maintenu).

Il est ici rappelé que, comme décrit à l'appui de la figure 21, le film 53 ainsi reporté présente un maximum 56 du taux de déformation majeure d'environ 6,6%.

On notera, à propos de la courbe 57, que le film 53 reporté sur la face courbe S1 en mettant en oeuvre une structure stratifiée telle que 33, présente un maximum du taux de déformation majeure d'environ 1%.

On notera que la courbe 57 est identique ou quasi-identique à la courbe correspondante du film 53 à l'état initial plan.

On voit que la courbe 57 comporte un pic 59 tel que le film 53 après report sur la face courbe S1 confère à la lentille dont il fait partie la capacité de filtrer une bande de longueurs d'ondes relativement étroite centrée sur la longueur d'ondes de 465 nm.

La longueur d'onde présentant le maximum de filtration est ici de 465 nm.

Le taux de coupure du film 53 est ici de 100%.

La lumière filtrée correspondant à la largeur en longueur d'onde du pic 59 pris à sa mi-hauteur s'étend d'environ 445 nm à environ 480 nm et sur cette gamme de longueur d'onde ; la transmission de lumière est inférieure à 50%.

On voit également que la courbe 58 comporte un pic 60 tel que le film 53 après report sur la face S1 confère à la lentille dont il fait partie la capacité de filtrer une bande de longueurs d'ondes relativement étroite centrée sur la longueur d'ondes de 420 nm.

On observera que les lentilles décrites ci-dessus obtenues avec le film 32 ou avec le film 53 présentent des courbes de transmission dont les maxima de filtration sont homogènes sur l'ensemble de leur surface.

En effet :

- soit les taux de déformation majeure observés sont homogènes sur la surface utile du film définie par une grande partie centrale du film fonctionnel (figure 16 et 21) : la partie périphérique du film fonctionnel, de 0 à 10 mm est de 70 à 85 mm sur les figures 16 et 21 (et d'ailleurs sur la figure 14), sera éliminé sur la lentille insérée dans la monture du porteur ; et
- soit les taux de déformation majeure observés sont faibles (figure 14) et ne conduisent pas à des modifications des propriétés spectrales des films (courbes 42 et 57).

Les lentilles obtenues par le procédé selon l'invention présentent un maximum de filtration au centre de la lentille qui diffère de moins de 5%, de préférence moins de 3%, du maximum de filtration en périphérie de la surface utile de la lentille.

On notera que tous les essais de déformation décrits ci-dessus à l'appui des figures 11 à 17, 21 et 22 ont été menés avec la face courbe S1 du substrat 31 qui est convexe et a un rayon de courbure de 85 mm (substrat ayant une puissance de base de 6,25 dioptries si l'indice de réfraction du substrat 31 est de 1,53).

D'autres essais ont été menés avec des substrats semblables au substrat 31 mais ayant une face courbe S1 de rayon de courbure différent de 85 mm.

Ici, les essais ont été menés avec des substrats dont la face courbe est convexe comme la face S1 et présente un rayon de courbure dans une gamme de 118 mm (puissance de base de 4,5 dioptries) à 66 mm (puissance de base de 8 dioptries).

Ces essais ont été menés, d'une part, pour le procédé de report mettant en oeuvre la structure stratifiée telle que la structure 33 ; et d'autre part pour le procédé de report dans lequel le film est retenu en périphérie par l'anneau 11, comme expliqué notamment à l'appui des figures 15 et 16.

Ces essais ont été menés pour le film 32 agencé comme montré sur la figure 18 et pour le film 53 agencé comme montré sur la figure 20.

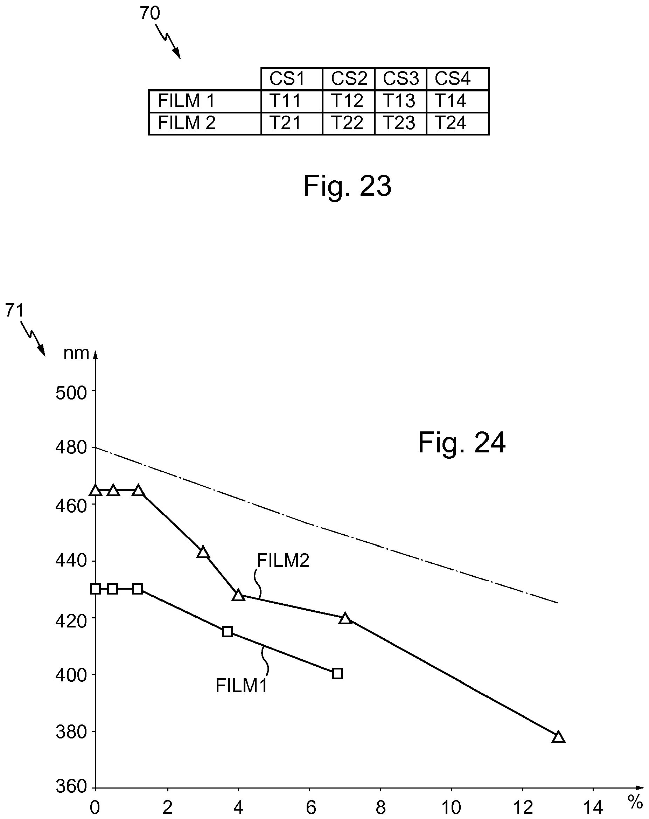

Pour chacun des procédés de report (avec membrane auxiliaire ou avec le film directement retenu sur son pourtour) ainsi qu'avec différents paramètres de température, pression et durée lors de l'étape de préformage, ont été notés les taux de déformation majeure pour chacune des courbures, ce qui a permis d'établir pour chacun de deux procédés de report une première base de connaissances 70 illustrée sur la figure 23.

Ici, la base de connaissances 70 se présente sous la forme d'un tableau comportant une première entrée, ici les différentes colonnes pour chaque rayon de courbure, noté respectivement CS1, CS2, CS3 et CS4 ; et ayant une seconde entrée, ici les lignes, pour chaque film, noté ici FILM 1 et FILM 2.

Ici, le FILM 1 correspond au film fonctionnel montré sur la figure 18 et le FILM 2 correspond au film fonctionnel montré sur la figure 20.

Dans ce tableau, chaque cellule à l'intersection d'une ligne et d'une colonne donne le taux de déformation majeure trouvé par les essais.

Par exemple, le taux de déformation majeure notée T22 a été obtenu pour le substrat dont la face courbe présente le rayon de courbure CS2 et pour le FILM 2.

De même, pour chacun des deux procédés de report, a été établie une deuxième base de connaissances 71, montrée sur la figure 24 sous la forme d'un abaque.

Cet abaque comporte des courbes donnant chacune la longueur d'ondes (indiquée en ordonnées) sur laquelle est centrée la raie de filtration d'un film fonctionnel en fonction du maximum du taux de déformation majeure en surface subie par ce film (indiqué en abscisses), respectivement une première courbe FILM1 correspondant au film fonctionnel montré sur la figure 18 ; une deuxième courbe FILM2 correspondant au film fonctionnel montré sur la figure 20 ; et une troisième courbe, en trait mixte, pour un film filtrant interférentiel qui suivrait la loi de BRAGG.

D'une façon générale, à l'issue de ces essais, il a été constaté pour certains films organiques et interférentiels, en particulier les films interférentiels avec un ordre tridimensionnel tel que les filtres à cristaux photoniques dont l'agencement est montré sur les figures 18 et 19, qu'un taux de déformation majeure inférieur à 3% ne modifie pas ou alors modifie de façon négligeable le spectre de transmission du matériau.

En revanche, pour ce même film dont l'agencement est montré sur les figures 18 et 19, au-delà d'un taux de déformation majeure de 3%, d'une façon générale, le taux de déformation majeure conduit à un déplacement de la position du pic principal de la courbe de transmission tel que le pic 43 ou 45, ce déplacement vérifiant la loi de BRAGG.

Au contraire, avec d'autres films, en particulier ceux ayant l'agencement montré sur la figure 20 (filtres organiques et interférentiels d'ordre monodimensionnel), le décalage du pic de la courbe de transmission est plus important que le maximum du taux de déformation majeure, ainsi que le montre le tableau ci-après :

| Maximum du taux de déformation majeure | 3% | 4% | 7% | 13% |
|---|---|---|---|---|
| Décalage du pic de la courbe de transmission | 22nm | 27nm | 45nm | 87nm |
| Pourcentage de décalage du pic (par rapport au pic initial de 465 nm) | 4.8% | 5.9% | 9.8% | 19% |

On constate ici que le décalage du pic observé est plus important que celui que l'on pouvait prévoir par la loi de BRAGG.

Ainsi, pour sélectionner quel film utiliser afin de fabriquer une lentille ophtalmique telle que la lentille 30 qui doit filtrer une bande prédéterminée de longueurs d'ondes relativement étroite, on peut choisir le film qui a, à l'état initial plan, la capacité de filtrer directement cette bande de longueurs d'ondes.

On notera que cet effet surprenant d'absence ou de quasi-absence de décalage du pic de la courbe de transmission est particulièrement intéressant à mettre en oeuvre dans le cas où le taux de déformation majeure est inférieur à 3%, plus particulièrement inférieur à 2%, et encore plus spécifiquement inférieur à 1,5%.

Dans les cas où le décalage du pic de la courbe de transmission n'est pas négligeable, on utilise les deux bases de connaissance telles que la première base 70 (figure 23) et la deuxième base 71 (figure 24) pour déterminer, parmi les différents films sur lesquels ont porté les essais, quel est celui qui convient pour être utilisé.

Plus précisément, si l'on souhaite que le film fonctionnel tel que 32 ou 53 assujetti à la face courbe telle que S1 d'un substrat tel que 31 soit configuré pour filtrer une bande prédéterminée de longueurs d'ondes centrée sur une longueur d'ondes notée $\lambda p$ avec la face courbe qui a une courbure notée CS, on sélectionne avec la première base de connaissance 70 et avec la deuxième base de connaissance 71, parmi la pluralité de film présélectionnés, c'est-à-dire le FILM 1 et le FILM 2, un film pour lequel la longueur d'ondes (figurant en ordonnées) sur laquelle le pic de la courbe de transmission est centré après déformation correspond à la longueur d'ondes centrale $\lambda p$ de la bande de filtration pour le taux de déformation donné par la courbure CS.

Par exemple si l'on souhaite que la lentille obtenue filtre 100% d'une bande de longueur d'ondes centrée à 435 nm avec une largeur de bande (Full Width at Half Maximum) de 29 nm, il convient d'utiliser un film qui, à l'état initial plan, filtre 100% d'une bande de longueur d'ondes centrée à 457 nm (avec la même largeur de bande) et de le déformer de 4%, ce qui correspond à un rayon de courbure de 118 mm.

Dans des variantes non illustrées, le tableau 70 et l'abaque 71 sont remplacés par une première base de connaissance et une deuxième base de connaissances d'une autre nature, par exemple par des fichiers de données enregistré dans une mémoire électronique et un logiciel d'interface entre l'utilisateur et les données enregistrées dans la mémoire.

Dans des variantes non illustrées, le taux de déformation pris en compte est différent du maximum du taux de déformation majeure en surface, par exemple un taux moyen de déformation.

D'une façon générale, comme mentionné précédemment, l'invention s'applique aussi bien à un report d'un film fonctionnel sur une face concave et/ou convexe d'une lentille ophtalmique, celle-ci pouvant présenter des rayons de courbure compris, par exemple, entre 350 mm et 53 mm, et un diamètre, dans le cas d'une lentille ophtalmique de géométrie ronde, compris entre 55 mm et 90 mm.

**Revendications**

1. Procédé de fabrication d'une lentille ophtalmique comportant un substrat (31) et un film fonctionnel assujetti à une face courbe (S1) dudit substrat, ledit procédé de fabrication comportant un procédé de report dudit film fonctionnel, initialement plan, sur ladite face courbe (S1) ; **caractérisé en ce que**, pour que ledit film fonctionnel (32 ; 53) assujetti à ladite face courbe (S1) soit configuré pour filtrer une bande prédéterminée de longueurs d'ondes centrée sur une longueur d'ondes notée $\lambda$p avec ladite face courbe (S1) qui a une courbure notée CS sélectionnée parmi un ensemble prédéterminé de courbures (CS1, CS2, CS3, CS4), on met en oeuvre les étapes de :

   i) présélectionner une pluralité de films fonctionnels (FILM 1, FILM 2) chacun initialement plan et chacun initialement configuré pour filtrer une bande de longueurs d'ondes centrée sur une longueur d'ondes notée $\lambda$i individuelle à chaque film présélectionné ;
   ii) établir par des essais une première base de connaissances (70) donnant, pour chaque courbure (CS1, CS2, CS3, CS4) dudit ensemble, le taux de déformation (T11 - T24) de chaque film présélectionné à l'étape i) lorsqu'est mis en oeuvre ledit procédé de report ;
   iii) établir par des essais une deuxième base de connaissances (71) donnant, sur une plage de taux de déformation prédéterminée, pour chaque film (FILM 1, FILM 2) présélectionné à l'étape i), la longueur d'onde notée $\lambda$i' sur laquelle est centrée la bande de longueur d'ondes que filtre ledit chaque film en fonction de son taux de déformation ;
   iv) sélectionner avec la première base de connaissances (70) et la deuxième base de connaissances (71), parmi la pluralité de films présélectionnés à l'étape i), un film dont la longueur d'onde $\lambda$i' est égale à $\lambda$p pour le taux de déformation donné pour la courbure CS ; et
   v) mettre en oeuvre ledit procédé de report pour assujettir le film sélectionné à l'étape iv) sur ladite face courbe (S1).

2. Procédé selon la revendication 1, **caractérisée en ce que** ledit film fonctionnel (32 ; 53) est un film filtrant organique et interférentiel.

3. Procédé selon la revendication 2, **caractérisé en ce que** ledit film fonctionnel (32) présente un ordre tridimensionnel, avec une couche organique (51 ; 52) formée de préférence par des cristaux photoniques.

4. Procédé selon la revendication 2, **caractérisé en ce que** ledit film fonctionnel (53) présente un ordre monodimensionnel, de préférence avec un empilement d'une pluralité de films organiques (54).

5. Procédé selon l'une quelconque des revendications 1 à 4, **caractérisé en ce que** la bande de longueur d'ondes centrée sur $\lambda$p est comprise entre 400 nm et 460 nm, de préférence entre 415 nm et 450 nm.

6. Procédé selon l'une quelconque des revendications 1 à 5, **caractérisé en ce qu'**au moins 20%, préférentiellement 30%, très préférentiellement 50% de la lumière de la bande de longueur d'onde centrée sur $\lambda$p est filtrée.

7. Procédé selon l'une quelconque des revendications 1 à 6, **caractérisé en ce que** le procédé de report comporte les étapes de :

   i) préformer ledit film fonctionnel (32 ; 53) pour lui donner une courbure ;
   ii) mettre en contact le centre de la face convexe dudit film fonctionnel (32 ; 53) avec le centre de la face courbe (S1) dudit substrat (31); et
   iii) appliquer ensuite ledit film fonctionnel (32 ; 53) afin de diffuser radialement à partir du centre du film (32 ; 53) jusqu'à sa périphérie le contact conformai entre ledit film (32 ; 53) et ledit substrat (31).

8. Procédé selon la revendication 7, **caractérisé en ce que** lesdites étapes i), ii) et iii) sont mises en oeuvre avec ledit film fonctionnel (32 ; 53) qui fait partie d'une structure stratifiée (33) comportant une membrane auxiliaire (34) et une couche de liaison (35) entre ledit film fonctionnel (32 ; 53) et ladite membrane auxiliaire (34), seule ladite membrane auxiliaire étant immobilisée en périphérie.

9. Procédé selon l'une quelconque des revendications 1 à 8, **caractérisé en ce que** chaque dit taux de déformation (T11 - T34) d'un dit film (FILM1, FILM2) est le maximum du taux de déformation majeure (39, 41, 56) subie par le film (32 ; 53) sur une surface (S0).

10. Procédé selon l'une quelconque des revendications 1 à 9, **caractérisé en ce que** ladite plage de taux de déformation prédéterminé de la deuxième base de connaissance (71) comporte une plage allant de 0 à 5%.

**Patentansprüche**

1. Verfahren zur Herstellung einer Augenlinse, umfassend ein Substrat (31) und einen funktionellen Film, der für eine gekrümmten Seite (S1) des Substrats bestimmt ist, wobei das Herstellungsverfahren ein Verfahren der Übertragung des funktionellen Films, der anfänglich plan ist, auf die gekrümmte Seite (S1); **dadurch gekennzeichnet, dass**, damit der für die gekrümmte Seite (S1) bestimmte funktionelle Film (32; 53) eingerichtet ist, um ein vorbestimmtes Wellenlängenband, das auf eine Wellenlänge $\lambda p$ zentriert ist, mit der gekrümmten Seite (S1) zu filtern, die eine Krümmung CS aufweist, die unter einer vorbestimmten Gesamtheit von Krümmungen (CS1, CS2, CS3, CS4) ausgewählt ist, die folgenden Schritte eingesetzt werden:

   i) Vorauswahl einer Vielzahl von funktionellen Filmen (FILM 1, FILM 2), die jeweils anfänglich plan und jeweils anfänglich eingerichtet sind, um ein Wellenlängenband zu filtern, das auf eine Wellenlänge Ai zentriert ist, die für jeden vorausgewählten Film individuell ist;
   ii) durch Tests Erstellung einer ersten Wissensbasis (70), die für jede Krümmung (CS1, CS2, CS3, CS4) der Gesamtheit die Verformungsrate (T11 - T24) jedes in Schritt i) vorausgewählten Films angibt, wenn das Übertragungsverfahren eingesetzt wird;
   iii) durch Tests Erstellung einer zweiten Wissensbasis (71), die in einem vorbestimmten Verformungsratenbereich für jeden in Schritt i) vorausgewählten Film (FILM 1, FILM 2) die Wellenlänge $\lambda i'$ angibt, auf der das Wellenlängenband zentriert ist, das jeder Film in Abhängigkeit von seiner Verformungsrate filtert;
   iv) mit der ersten Wissensbasis (70) und der zweiten Wissensbasis (71) Auswahl eines Films unter der Vielzahl von in Schritt i) vorausgewählten Filmen, dessen Wellenlänge $\lambda i'$ gleich $\lambda p$ für die für die Krümmung CS angegebene Verformungsrate ist; und
   v) Einsatz des Übertragungsverfahrens, um den in Schritt iv) ausgewählten Film für die gekrümmte Seite (S1) zu bestimmen.

2. Verfahren nach Anspruch 1, **dadurch gekennzeichnet, dass** der funktionelle Film (32; 53) ein organischer Filterfilm oder ein Interferenzfilterfilm ist.

3. Verfahren nach Anspruch 2, **dadurch gekennzeichnet, dass** der funktionelle Film (32) eine dreidimensionale Ordnung aufweist, mit einer organischen Schicht (51; 52), die vorzugswiese von Photonenkristallen gebildet ist.

4. Verfahren nach Anspruch 2, **dadurch gekennzeichnet, dass** der funktionelle Film (53) eine eindimensionale Ordnung aufweist, vorzugsweise mit einer Stapelung einer Vielzahl von organischen Filmen (54).

5. Verfahren nach einem der Ansprüche 1 bis 4, **dadurch gekennzeichnet, dass** das auf $\lambda p$ zentrierte Wellenlängenband zwischen 400 nm und 460 nm, vorzugsweise zwischen 415 nm und 450 nm, liegt.

6. Verfahren nach einem der Ansprüche 1 bis 5, **dadurch gekennzeichnet, dass** mindestens 20 %, vorzugsweise 30 %, besonders bevorzugt 50 % des Lichts des auf $\lambda p$ zentrierten Wellenlängenbandes gefiltert werden.

7. Verfahren nach einem der Ansprüche 1 bis 6, **dadurch gekennzeichnet, dass** das Übertragungsverfahren die folgenden Schritte umfasst:

   i) Vorformen des funktionellen Films (32; 53), um ihm eine Krümmung zu verleihen;
   ii) Inkontaktbringen des Mittelpunkts der konvexen Seite des funktionellen Films (32; 53) mit dem Mittelpunkt der gekrümmten Seite (S1) des Substrats (31); und
   iii) sodann Aufbringen des funktionellen Films (32; 53), um radial vom Mittelpunkt des Films (32; 53) bis zu seiner Peripherie den konformen Kontakt zwischen dem Film (32; 53) und dem Substrat (31) zu verbreiten.

8. Verfahren nach Anspruch 7, **dadurch gekennzeichnet, dass** die Schritte i), ii) und iii) mit dem funktionellen Film (32; 53) eingesetzt werden, der Teil einer Schichtstruktur (33) ist, umfassend eine Hilfsmembran (34) und eine Verbindungsschicht (35) zwischen dem funktionellen Film (32; 53) und der Hilfsmembran (34), wobei nur die Hilfsmembran an der Peripherie festgestellt ist.

**9.** Verfahren nach einem der Ansprüche 1 bis 8, **dadurch gekennzeichnet, dass** jede Verformungsrate (T11 - T34) eines Films (FILM1, FILM2) das Maximum der größten Verformungsrate (39, 41, 56) ist, der der Film (32; 53) auf einer Fläche (S0) ausgesetzt ist.

**10.** Verfahren nach einem der Ansprüche 1 bis 9, **dadurch gekennzeichnet, dass** der vorbestimmte Verformungsratenbereich der zweiten Wissensbasis (71) einen Bereich von 0 bis 5 % umfasst.

**Claims**

**1.** Method for manufacturing an ophthalmic lens comprising a substrate (31) and a functional film securely fastened to a curved face (S1) of said substrate, said manufacturing method comprising a method for gluing said functional film, which is initially flat, to said curved face (S1); **characterized in that**, in order to ensure that said functional film (32; 53) when securely fastened to said curved face (S1) is configured to filter a preset band of wavelengths centred on a wavelength denoted λp, said curved face (S1) having a curvature denoted CS selected from a preset set of curvatures (CS1, CS2, CS3, CS4), the following steps are carried out:

i) a step of preselecting a plurality of functional films (FILM 1, FILM 2) that are each initially flat and that are each initially configured to filter a band of wavelengths centred on a wavelength, denoted Ai, specific to each preselected film;
ii) a step of establishing experimentally a first knowledge base (70) giving, for each curvature (CS1, CS2, CS3, CS4) of said set, the degree of deformation (TII-T24) of each film preselected in step i) once said gluing method has been implemented;
iii) a step of establishing experimentally a second knowledge base (71) giving, in a preset range of degrees of deformation, for each film (FILM 1, FILM 2) preselected in step i), the wavelength, denoted Ai', on which is centred the band of wavelengths that said each film filters depending on its degree of deformation;
iv) a step of selecting, using the first knowledge base (70) and the second knowledge base (71), from the plurality of films preselected in step i), a film the wavelength Ai' of which is equal to λp for the degree of deformation given for the curvature CS; and
v) a step of implementing said gluing method in order to securely fasten the film selected in step iv) to said curved face (S1).

**2.** Method according to Claim 1, **characterized in that** said functional film (32; 53) is an interferential and organic filtering film.

**3.** Method according to Claim 2, **characterized in that** said functional film (32) has a three-dimensional order, with an organic layer (51; 52) preferably formed by photonic crystals.

**4.** Method according to Claim 2, **characterized in that** said functional film (53) has a one-dimensional order, preferably with a multilayer of a plurality of organic films (54).

**5.** Method according to any one of Claims 1 to 4, **characterized in that** the band of wavelengths centred on λp is comprised between 400 nm and 460 nm and preferably between 415 nm and 450 nm.

**6.** Method according to any one of Claims 1 to 5, **characterized in that** at least 20%, preferably 30% and very preferably 50% of the light in the band of wavelengths centred on λp is filtered.

**7.** Method according to any one of Claims 1 to 6, **characterized in that** the gluing method comprises steps of:

i) preforming said functional film (32; 53) to give it a curvature;
ii) bringing the centre of the convex face of said functional film (32; 53) into contact with the centre of the curved face (S1) of said substrate (31); and
iii) then applying said functional film (32; 53) in order to diffuse radially from the centre of the film (32; 53) as far as its periphery the conformal contact between said film (32; 53) and said substrate (31).

**8.** Method according to Claim 7, **characterized in that** said steps i), ii) and iii) are implemented with said functional film (32; 53), which forms part of a stratified structure (33) comprising an auxiliary membrane (34) and a binding layer (35) between said functional film (32; 53) and said auxiliary membrane (34), only said auxiliary membrane being immobilized peripherally.

9. Method according to any one of Claims 1 to 8, **characterized in that** each said degree of deformation (T11-T34) of a given film (FILM 1, FILM 2) is the maximum degree of major deformation (39, 41, 56) experienced by the film (32; 53) on a surface (S0).

10. Method according to any one of Claims 1 to 9, **characterized in that** said preset range of degrees of deformation of the second knowledge base (71) comprises a range extending from 0 to 5%.

Fig. 1
Art Antérieur

Fig. 2 Art Antérieur

Fig. 3 Art Antérieur

Fig. 4
Art Antérieur

Fig. 5
Art Antérieur

Fig. 6
Art Antérieur

Fig. 7
Art Antérieur

Fig. 8
Art Antérieur

Fig. 9

Fig. 10

Fig. 11

Fig. 12

36

37

| | 1.00 |
|---|---|
| | 0.80 |
| | 0.60 |
| | 0.40 |
| | 0.20 |
| | 0.00 |

XIV

Fig. 13

%

39

38

0.843
0.700
0.600
0.500
0.400
0.300
0.200
0.100
0.053

0.0   7.5   15.0   22.5   30.0   37.5   45.0   52.5  56.7   nm

Fig. 14

32        Fig. 15        S0

Fig. 16

Fig. 17

Fig. 18

Fig. 19

Fig. 20

Fig. 21

Fig. 22

70

| | CS1 | CS2 | CS3 | CS4 |
|--------|-----|-----|-----|-----|
| FILM 1 | T11 | T12 | T13 | T14 |
| FILM 2 | T21 | T22 | T23 | T24 |

## Fig. 23

71

## Fig. 24

## RÉFÉRENCES CITÉES DANS LA DESCRIPTION

**Documents brevets cités dans la description**

- US 20070212518 A
- FR 2883984
- US 20080314499 A
- FR 2918917
- US 20100193112 A
- US 20130171438 A
- US 20110222142 A
- US 6531230 B
- WO 0007046 A
- US 5976424 A
- WO 9936248 A
- US 6117530 A
- US 20120320306 A